# EUROPEAN PATENT APPLICATION

(11) **EP 2 634 152 A1**
(43) Date of publication of application: **04.09.2013**
(21) Application number: 13169507.4
(22) Date of filing: 10.04.2009
(51) Int. Cl.: C04B 24/26, C04B 24/38, C04B 103/40

(54) **Rheology influencing additive for mineral building materials**

(30) Priority: 16.04.2008 EP 08154650
(62) Divisional of application: 09753736.9
(71) Applicant: Akzo Nobel N.V., 6824 BM Arnhem (NL)
(72) Inventor: Bühler, Erwin, CH-6204 Sempach (CH); Waser, Hanspeter, CH-6024 Hildisrieden (CH)
(74) Representative: Akzo Nobel IP Department

(57) **Abstract**

The present invention pertains to a rheological additive to replace casein in minerally setting building material compounds, characterized in that the rheological additive contains
- at least two different dispersing agents and at least one stabilizer, or
- at least one dispersing agent and at least two different stabilizers, wherein said at least one dispersing agent is or said at least two dispersing agents are selected from the group of lignin sulfonate, polycarboxylate, polycarboxylate ether, melamine formaldehyde sulfonate, alkylphenol glycol ether and/or naphthaline sulfonates, and said at least one stabilizer is or said at least two stabilizers are selected from the group of modified or unmodified, fully or partially hydrolyzed polyvinyl alcohol, polyvinyl acetal, polyvinyl pyrrolidone, polyalkylene glycol, polyalkylene oxide, agar-agar, carob seed grain, pectin, poly(meth)acrylate and/or (meth)acrylate thickeners, poly(meth)acrylamides, polyurethanes, associative thickeners, gelatine and/or soy protein. In addition, a process for the preparation of the additive, the use of the same, as well as minerally setting building material compounds containing the rheological additive are described.

## Description

The invention pertains to a rheological additive that can replace casein in minerally setting building material compounds, processes for the preparation of the additive, the use thereof, as well as building material compounds containing the rheological additive.

In minerally setting compounds casein is often used as a liquefier or superplasticiser. In particular in the case of self-levelling levelling compounds, the use of casein leads to a low yield point and a high plastic viscosity, which is highly valued by the user especially in the case of application by hand. Such casein-containing compounds as a rule are also less sensitive regarding the amount of mixing water used, which is highly valued by the person handling it. Moreover, the use of casein leads to further advantages such as a low yield point, good levelling out of the applied levelling compound, little film formation, optimal processing time also after the application, good flowing together of levelling compounds applied next to each other even after different intervals of time, such as for instance when the levelling compounds are applied at separate times, no or only low sedimentation of the compound, which shows itself int. al. in that the compound does not wash out, which is also called bleeding. The sum of these properties is often also called honey-like consistency by the person skilled in the art, which is a good description of the rheological properties obtained as a result of the casein.

When instead of casein synthetic superplasticisers such as for instance melamine formaldehyde sulfoxylates, lignin sulfonates or polycarboxylate ethers are used, such levelling compounds obtain a quite different rheology, which at first sight is manifested by a greatly reduced viscosity. In any case it is not possible to apply these by hand in the thin layer thickness of typically 1 - 3 mm required by the user. To this end it is important that the levelling compound has a rheology which is the same as or at least comparable with that of casein-containing levelling compounds.

An important drawback of casein is its strongly fluctuating price, which moreover has risen strongly in the last few years. Moreover, the quality of casein can also change, applicable if necessary calls for an adjustment of the recipe. For this reason there is a growing need to replace casein as raw material, with the object of obtaining more constant raw material prices and a more uniform quality. In any case, it is necessary that in particular the rheological properties of the minerally setting compounds do not change or change only insignificantly.

Thus DE 102 26 088 A1 describes an additive based on modified polycarboxylates and water-soluble ethers of high polymer polysaccharides, in particular water-soluble cellulose ethers with a viscosity as 2% aqueous solution of at least about 1,000 mPas. The use of this additive leads to comparable and in part clearly superior properties such as for instance an improved water retention.

WO 2006/002935 A1 describes a mixing composition with dispersing effect, containing a copolymer based on unsaturated mono- or dicarboxylic acid derivatives and oxyalkylene glycol-alkenyl ethers and water-soluble sulfo groups-containing co- and terpolymers with a number average molecular weight of 50,000 to 20,000,000 g/mol. The described mixing compositions should also be suitable as solvents independent of the dispersing effect, in which case they can also be used in self-levelling levelling compounds or surfacers on the basis of their simultaneously stabilizing effect, in particular as a substitute for casein.

However, the solutions proposed in the state of the art cannot replace all rheological subtleties of casein and/or their preparation is extremely complex and demanding.

Hence it is the object of the present invention to propose a rheological additive which has a properties profile which is identical or very similar to that of casein in various minerally setting compounds and which is easy to prepare. In addition, it should be possible to easily adapt the properties profile of differently formulated compounds.

Surprisingly, it was found that the object can be attained by means of a rheological additive that is suitable for use in a minerally setting building material compound, wherein the rheological additive contains
- at least two different dispersing agents and at least one stabilizer, or
- at least one dispersing agent and at least two different stabilizers, wherein said at least one dispersing agent is or at least two disperging agents are selected from the group of lignin sulfonate, polycarboxylate, polycarboxylate ether, melamine formaldehyde sulfonate, alkylphenol glycol ether and/or naphthaline sulfonates, and
wherein said at least one stabilizer is or at least two stabilizers are selected from the group of modified or unmodified, fully or partially hydrolyzed polyvinyl alcohol, polyvinyl acetal, polyvinyl pyrrolidone, polyalkylene glycol, polyalkylene oxide, agar-agar, carob seed grain, pectin, poly(meth)acrylate and/or (meth)acrylate thickeners, poly(meth)acrylamides, polyurethanes, associative thickeners, gelatine and/or soy protein.

It is often preferred that at least one dispersing agent and/or stabilizer enters with at least one further component of the building material compound and/or the additive into a viscosity-increasing interaction in the minerally setting building material compound mixed with water.

With the additive according to the invention it is possible to replace at least 50 wt.%, preferably at least 75 wt.%, in particular even 100 wt.% of the used casein with the rheological additive. The present invention also includes the process and/or the method for replacing these amounts of casein in minerally setting building material compounds with the rheological additive according to the invention.

Depending on the composition of the additive and the minerally setting building material compound, this is used in building material compound in an amount of at least about 5 wt.%, preferably at least about 10 wt.%, in particular at least about 20 wt.%, and/or at most about 500 wt.%, preferably at most about 300 wt.%, in particular at most about 200 wt.%, based on the amount of casein to be replaced.

Within the meaning of the invention, dispersing agents are surface-active substances which as a rule adsorb on the surfaces of the solid particles and increase the wetting with water and thus the distribution (dispersion) of solid particles in a liquid. According to the invention, this includes in particular water-soluble compounds which, at 23°C, as 10 wt.% aqueous, pH-neutral and/or alkaline solution have no or no substantial effect on the viscosity of water, i.e. the Brookfield viscosity at 20 rpm should not be more than 100 mPas. Moreover, in minerally setting building material compounds the dispersing agents allow the mixing water content, based on the dry content of the compound in question, to decrease without the degree of spread in accordance with EN 12706 (see Chapter 3.1, implementation in accordance with Chapter 8, Edition November 1999) undergoing substantial change. Included among the dispersing agents according to the invention are also plasticisers, liquefiers, superplasticisers, cement superplasticisers, and water reducing agents.

Preferred dispersing agents as a rule are organic polymers with a mean molecular weight M_{w} of about 500 to about 500,000, preferably of about 1,000 to about 250,000. The dispersing agents according to the invention in many cases are present in the alkaline pH-range as ionic polymers and have a high charge density. By a high charge density is meant within the meaning of the invention that per monomer unit with ionic groups there are up to 10 other monomer units, preferably up to 5 other monomer units, in particular up to 3 other monomer units.

Preferred dispersing agents are lignin sulfonates, including lignosulfonates and/or modified lignosulfonates; polycarboxylates, including low-molecular poly(meth)acrylic acids and the derivatives thereof, polyhydroxycarboxylic acids, copolymers of linear or cyclic C₄- to C₆-olefins and unsaturated ethylene dicarboxylic acids, styrene-maleic acid copolymerisates and/or vinyl ether-maleic acid copolymerisates; polycarboxylate ethers, including copolymers of unsaturated mono- and/or dicarboxylic acid derivatives and/or oxyalkylene glycol-alkenyl ethers; melamine-formaldehyde-sulfonates, including melamine sulfonic acid-formaldehyde condensates; naphthaline sulfonates, including naphthaline-formaldehyde-sulfonates; and/or alkylphenol glycol ethers. When the dispersing agents are present as salts, as a rule magnesium, calcium, lithium, sodium and/or potassium salts are preferred.

The proportions of the dispersing agent or dispersing agents in the rheological additive are chosen such that their content in the minerally setting building material compound is at least about 5 wt.%, preferably at least about 10 wt.%, in particular at least about 20 wt.%, to at most about 400 wt.%, preferably at most about 300 wt.%, in particular at most about 200 wt.%, based on the amount of casein to be replaced.

The rheological additive according to the invention in addition contains at least one stabilizer, with it also being possible for different stabilizers to be combined with one another. Such stabilizers allow the mixing water content in minerally setting building material compounds to be increased without the compound washing out or bleeding, which means that a part of the water does not separate and that no water film is formed on the surface. The stabilizers to be used within the meaning of the invention in addition as a rule are water-soluble or water-dispersible compounds which as 10 wt.% aqueous pH neutral and/or alkaline solution or dispersion often, but not necessarily, have a Brookfield viscosity at 20 rpm of more than 100 mPas even at 23°C.

As stabilizers to be used according to the invention synthetic and/or natural organic polymers can be employed, with thickeners also being included.

Included among the stabilizers which are synthetically prepared organic polymers are polyvinyl pyrrolidones and/or polyvinyl acetals with a preferred molecular weight of 2,000 to 400,000, fully or partially hydrolyzed polyvinyl alcohols and the derivatives thereof, which can be modified for instance with amino groups, carboxylic acid groups and/or alkyl groups, with a degree of hydrolysis of preferably about 70 to 100 mol.%, in particular of about 80 to 98 mol.%, and a Höppler viscosity as 4% aqueous solution of preferably 1 to 100 mPas, in particular of about 3 to 50 mPas (measured at 20°C in accordance with DIN 53015). Furthermore, it includes polyalkylene glycols and/or polyalkylene oxides, such as polymerisates of propylene oxide and/or ethylene oxide, with these preferably having a mean molecular weight M_{w} of about 1,000 to about 5,000,000, preferably of about 2,000 to about 3,000,000, in particular of about 5,000 to about 1,000,000, among which are also counted the copolymerisates and block copolymerisates thereof, polyaddition products such as polyalkylene oxides and polyalkylene glycols, in which case the alkylene group typically is a C₂- and/or C₃-group, among which are also counted polyethylene and/or polypropylene glycol, polyethylene and/or polypropylene oxide and/or the copolymers and block copolymers thereof. Furthermore, it also includes poly(meth)acrylate and (meth)acrylate thickeners, poly(meth)acrylamides, polyurethanes and/or associative thickeners.

Preferred synthetic organic polymeric stabilizers are in particular partially saponified polyvinyl alcohols with a degree of hydrolysis of 80 to 98 mol.% and a Höppler viscosity as 4% aqueous solution of 1 to 50 mPas, polyalkylene glycol and/or polyalkylene oxide, in which case the alkylene group is a C₂-and/or C₃-group, poly(meth)acrylate and (meth)acrylate thickeners, poly(meth)acrylamides and/or polyurethanes. Water-soluble sulfo groups-containing co- and terpolymers with a number average molecular weight of 50,000 to 20,000,000 g/mol are less preferred as components of the additive according to the invention.

Among the natural organic polymeric stabilizers are biopolymers and the derivatives thereof. Among these are agar-agar, carob seed grain, pectin, alginates, peptides and/or proteins. Preferred proteins are gelatine and/or soy-protein.

The stabilizer or stabilizers of the rheological additive are used in the minerally setting building material compound in an amount of at least about 0.1 wt.%, preferably at least about 1 wt.%, in particular at least about 5 wt.%, to at most about 350 wt.%, preferably at most about 250 wt.%, in particular at most about 100 wt.%, based on the amount of casein to be replaced.

The weight ratio of the sum of the dispersing agents to the sum of the stabilizers in the additive according to the invention is about 500 : 1 to about 1 : 10, preferably about 300 : 1 to about 1 : 5, in particular about 100 : 1 to about 1 : 2.

Surprisingly, it was found that the minerally setting building material compound containing the inventive additive, when mixed with water, obtains a rheology very similar to when casein is used. This is in particular the case when at least one dispersing agent and/or one stabilizer of the additive enters into a viscosity-increasing interaction with at least one further component of the building material compound and/or the additive in the minerally setting building material compound mixed with water.

The viscosity-increasing interaction of the at least one dispersing agent and/or stabilizer manifests itself in that, upon its addition, with the same mixing water content, based on the dry content of the building material compound, the flow time in accordance with EN ISO 2431 (Edition May 1996), measured according to Chapter 7.2 with a flow cup with a nozzle diameter of 6 mm, is increased by at least 50%, preferably by at least 100%, in particular by at least 150%, and quite especially preferably by at least 200%, while the degree of spread in accordance with EN 12706 changes by less than 20%, preferably less than 10%. To this end the amount of the dispersing agent or dispersing agents and/or stabilizer or stabilizers is chosen such that it is in accordance with the additive according to the invention, in order to obtain the desired properties. When it is not possible or too expensive to determine this amount, each dispersing agent and/or stabilizer contained in the additive is used in equal shares, with the sum of the used dispersing agents and stabilizers corresponding to the amount by weight of casein which is to be replaced.

Surprisingly, it was also concluded that as a result of the addition of the inventive additive, and in particular when at least one dispersing agent and/or stabilizer can undergo a viscosity-increasing interaction, the minerally setting building material compound mixed with water obtains a rheology with a low yield point and high plastic viscosity, as is the case when casein is used. Moreover, the building material compounds containing the additive also obtain the honey-like rheology typical for casein-containing compounds, even when the use of casein is fully abstained from.

It is often preferred that at least one dispersing agent and/or stabilizer of the additive enters into a viscosity-increasing interaction with at least one further component of the building material compound and/or the additive in the minerally setting building material compound mixed with water. This further component means a different component from the one dispersing agent and/or stabilizer which enters into a viscosity-increasing interaction, but can itself be such a dispersing agent and/or stabilizer, which is part of the building material compound and/or the additive. It is also possible that this further component is neither a dispersing agent nor a stabilizer, but has a quite different function. If an associative thickener is present, it is most often preferred that also another dispersing agent or stabilizer can undergo with at least one further component a viscosity-increasing interaction.

It is often advantageous when at least one dispersing agent and/or stabilizer which enters into a viscosity-increasing interaction with a further component is a polymer with functional groups. These can be ether, ester, nitrile, amide, amine, imine, carboxyl, hydroxyl, keto, aldehyde, carbamate, carbamide, carboxylic anhydride and/or ammonium groups. Quite especially preferred are carboxyl, hydroxyl, amine, imine and/or ether groups.

In order to bring about a particularly good interaction, it is useful as a rule when the polymer with functional groups does not contain more than 10 other monomer units, preferably not more than 5 other monomer units, in particular not more than 2 other monomer units per monomer unit with functional group.

In a quite particular embodiment the additive and/or the minerally setting building material compound contain at least two dispersing agents and/or stabilizers, which enter into a viscosity-increasing interaction with one another. Often it is preferred when these are part of the additive according to the invention. Advantageously, both dispersing agents and/or stabilizers are polymers of which the functional groups are at least one carboxyl, hydroxyl, ether, ester, nitrile, amide, amine, imine, keto, aldehyde, carbamate, carbamide, carboxylic anhydride and/or ammonium group, with the nature of the functional groups of the two dispersing agents and/or stabilizers differing one from the other. Quite especially preferred are polymers which contain groups which enter into interaction with one another by means of hydrogen bridge bonds. Nonlimiting examples of such groups are the carboxyl groups of polycarboxylates and the hydroxyl groups of polyvinyl alcohol, as well as the hydroxyl groups of polyvinyl alcohol and the ether groups of polyethylene glycol.

The additive according to the invention can also contain further components. Preferred further components are surface-active compounds such as powdery and/or liquid wetting agents, anti-foaming agents and/or tensides, alkyl, hydroxyalkyl and/or alkylhydroxyalkyl polysaccharide ethers such as cellulose ether, starch ether and/or guar ether, with the alkyl and the hydroxyalkyl group typically being a C₁- to C₄-group, dextrins, glucosaccharides, biopolymers such as gum arabic, gum tragacanth, synthetic polysaccharides such as anionic, nonionic or cationic heteropolysaccharides, in particular xanthan gum, welan gum, and diutan gum, dispersing agents, further rheology control additives such as for instance casein, agents to control the hydration of minerally setting systems, in particular setting accelerators, solidification accelerators and/or setting retarders, air-entraining agents, dispersions and water-redispersible dispersion powders based on water-insoluble film-forming polymers such as for instance on the basis of vinyl acetate, ethylene-vinyl acetate, ethylene-vinyl acetate-vinyl versatate, ethylene-vinyl acetate-(meth)acrylate, ethylene-vinyl acetate-vinyl chloride, vinyl acetate-vinyl versatate, vinyl acetate-vinyl versatate-(meth)acrylate, vinyl versatate-(meth)acrylate, pure (meth)acrylate, styrene-acrylate and/or styrene-butadiene, in which case vinyl versatate preferably is a C₄- to C₁₂-vinyl ester and the polymerisates can contain about 0 - 50 wt.%, in particular about 0 - 30 wt.%, and quite especially preferably about 0 - 10 wt.% of further monomers, in particular those with functional groups, hydrophobic agents and/or additives for reduction of the water absorption capacity, in particular based on silanes, siloxanes, silicones, metal soaps, fatty acids and/or fatty acid esters, additives for the reduction of shrinkage and/or efflorescence, such as for instance compounds based on natural resins, in particular colophonium and/or the derivatives thereof, fibres such as cellulose fibres, additives for the entry of air voids, water retention agents, pigments, anti-caking agents, fillers and/or aggregates such as quartzitic and/or carbonatic sands and/or powders such as for instance quartz sand and/or limestone powder, carbonates, silicates, chalks, layered silicates, precipitated silicas, light-weight fillers such as for instance hollow microspheres of glass, fly ash, microsilica, highly dispersed and/or pyrogenic silicas, polymers such as polystyrene spheres, aluminosilicates, silica, aluminium-silica, calcium-silicate hydrate, silicon dioxide, aluminium-silicate, magnesium-silicate, aluminium-silicate hydrate, calcium-aluminium-silicate, calcium-silicate hydrate, aluminium-iron-magnesium-silicate, calcium metasilicate, clays such as vermiculites and bentonite and/or vulcanic slag, as well as pozzolanes such as metakaolin, latent hydraulic components, cement and/or gypsum, in which case the fillers and/or light-weight fillers can also have a natural or artificially generated colour. Preferred light-weight fillers are perlites, celites, cabosil, circosil, eurocell, fillites, promaxon, vermex and/or wollastonite.

Quite especially preferred additives are polymer dispersions, dispersion powders, fillers, anti-caking agents, polysaccharide ethers, hydrophobic agents, in particular silanes, silane esters, siloxanes, fatty acids and/or fatty acid esters, water retention agents, as well as additives to control the shrinkage and/or the reduction of efflorescence.

For surface-active substances for instance, the content of these additives can be very low and be in the range of about 0.01 wt.% or more, in particular about 0.1 wt.% and more, but as a rule it should not exceed about 10 wt.%, in particular about 5 wt.%. On the other hand, for instance the content of water-redispersible polymer powder and/or fillers can be higher and can even be the 1,000-fold amount or more of the rheological additive according to the invention.

The additive according to the invention can be present as liquid, powder, granulate and/or flakes and preferably is water-soluble or readily dispersible in water. Often it is advantageous when the additive is a powder or granulate and/or consists of flakes. Because of this the additive can easily be worked into a dry mixture already at the factory, which makes possible exact dosing and a homogeneous distribution and makes its preparation particularly easy and economical. For use this dry mixture then only has to be mixed with the appropriate amount of water and applied, which brings many advantages with it, such as for instance easy handling, simplified logistics and/or resistance to freeze-thaw.

According to the invention, processes for the preparation of the additive are also claimed. In a preferred embodiment the individual components are mixed with one another in powder form, in which process commercially available mixers can be used. In a further preferred embodiment, when at least one of the components is present in liquid form, the remaining components are mixed as liquid and/or as powder with the component in liquid form. In another preferred embodiment, when at least one of the components is present in liquid form, it is dried, in which case the further components are added as liquid and/or as powder before, during and/or after the drying. In yet another preferred embodiment the or part of the individual components of the rheological additive are added as separate components to the building material compound during the preparation thereof and are mixed with the further components of the building material compound. In this embodiment the building material compound can be a dry mixture which is mixed with water later on immediately prior to being used, or it can already be mixed with water. In the case of 2-component systems, the additive or parts of the additive can be added to the liquid and/or powdery components, and/or be fed additionally during the mixing process, for instance with the mixing water.

When the process has a drying step, drying can take place by means of every suitable process. Preferred are spray drying, freeze drying, fluidized bed drying, drum drying and/or flash drying, in which case spray drying is particularly preferred and the spraying can take place for instance by means of a spraying wheel, one-component or multi-component nozzle. If necessary, the mixture to be dried can still be diluted with water, in order to achieve a suitable viscosity for the drying. The drying temperature in principle has no real limits. In particular because of safety-related considerations, however, it should not, as a rule, exceed about 200°C, in particular about 175°C. In order to attain sufficiently efficient drying, temperatures of about 110°C or higher, in particular of about 120°C or higher, are preferred.

The rheological additive according to the invention is suitable for use in minerally setting building material compounds, with the minerally setting building material compound preferably being a dry mortar, fresh mortar, concrete, shotcrete, dry concrete, self-compacting concrete, reinforced concrete, cellular concrete, aerated concrete, foamed concrete, plaster of Paris, plaster, shotplaster, gypsum plaster, gypsum/cement plaster, cement/lime plaster, flow bed mortar, thermal insulation mortar, repair mortar, tile grout, plywood mortar, grouting mortar, cementitious coatings for concrete, bedding mortar, injection mortar, anchor mortar, bonding mortar, sealing compounds, cement primers, ceramic tile adhesives, joint adhesives, powder coatings, parquet adhesives, flowable floor screed, cementitious floor screed, cementitious rapid setting screed, a levelling compound, self smoothing flooring compound, self-levelling flooring compound, smoothing compound and/or trowelling compound.

The minerally setting building material compound contains at least one mineral binder. By this are meant within the meaning of the invention binders which as a rule are powdery and in particular consist of at least a) one hydraulically setting binder, b) a latent hydraulic binder, and/or c) a non-hydraulic binder which reacts under the influence of air and water.

As preferred hydraulically setting binders can be used cement, in particular Portland cement, for instance in accordance with EN 196 CEM I, II, III, IV and/or V, calcium-aluminate-cements such as for instance high-alumina cement and/or gypsum, by which are meant in the meaning of this invention in particular calcium sulfate in the form of α- and/or β-semihydrate and/or anhydrite of form I, II and/or III. As latent hydraulic binders pozzolanes such as metakaolin, calcium metasilicate and/or vulcanic slag, vulcanic tuff, trass, fly ash, acid blast-furnace slag and/or silica dust can be used, which react hydraulically in combination with a calcium source such as calcium hydroxide and/or cement. As non-hydraulic binder which reacts under the influence of air and water there can be used in particular lime, for the most part in the form of calcium hydroxide and/or calcium oxide. Preferred above all are pure Portland cement-based construction material compounds or a mixture of Portland cement, calcium-aluminate cement, and calcium sulfate, with it being possible, if so desired, to still add latent hydraulic and/or non-hydraulic binders to both systems.

According to the invention, minerally setting building material compounds containing the rheological additive according to the invention are also claimed. The additive and/or individual components of the additive can be added to the building material compound in the preparation of the dry mixture, such as for instance dry mortars. To this end it is advantageous when the additive is present in solid form such as powder, granulate and/or flakes. However, the additive and/or individual components can also be dosed in solid and/or in liquid form shortly before and/or during the mixing with water.

The claimed minerally setting building material compounds can be formulated as dry mortar, fresh mortar, concrete, shotcrete, dry concrete, self-compacting concrete, reinforced concrete, cellular concrete, aerated concrete, foamed concrete, plaster of Paris, plaster, shotplaster, gypsum plaster, gypsum/cement plaster, cement/lime plaster, flow bed mortar, thermal insulation mortar, repair mortar, tile grout, grouting mortar, plywood mortar, cementitious coatings for concrete, bedding mortar, injection mortar, anchor mortar, bonding mortar, sealing compounds, cement primers, ceramic tile adhesives, joint adhesives, powder coatings, parquet adhesives, flowable floor screed, cementitious floor screed, cementitious rapid setting screed, levelling compounds, self smooting flooring compounds, self-levelling flooring compounds, smoothing compounds and/or trowelling compounds.

Quite especially preferred are building material compounds in the form of mixtures, in particular dry mortar mixtures, which are formulated as levelling compounds, flowable floor screeds, self smoothing flooring compounds, smoothing compounds and/or trowelling compounds as well as self-levelling flooring compounds, and which are mixed with water only shortly before application.

Surprisingly, it was found that with the additive according to the invention minerally setting building material compounds can be formulated which have properties which are similar to those of casein-containing compounds. Thus dry mortars and/or water-based formulations, in particular levelling compounds, levellers, floor screeds, smoothing compounds and/or trowelling compounds as well as self-levelling flooring compounds, of which the properties are similar to those of casein-containing compounds, can be prepared in an easy way. Quite especially preferred are self-levelling flooring compounds with these properties, where the degree of spread, measured in accordance with EN 12706, does not deviate more than 10% and/or the flow time of the self-levelling flooring compound, measured with a flow cup with a 6 mm-nozzle in accordance with EN ISO 2431 (Chapter 7.2), does not deviate more than 15% from the self-levelling flooring compound containing the normal amount of casein (100 wt.% casein) and without rheological additive according to the invention. This 100 wt.% casein is based on the amount of casein which the skilled person uses without the additive according to the invention in order to obtain the preferred properties of commercially available, casein-containing self-levelling flooring compounds generally known to the skilled person.

The claimed building material compounds contain about 0.01 to about 3.0 wt.%, preferably about 0.05 to about 2.0 wt.%, in particular about 0.1 to about 1.0 wt.% of rheological additive, based on the dry content of the building material compound.

The rheological additive according to the invention is easy to prepare, since as a rule commercially available products can be used. When it is present in solid form, in particular as powder, granulate and/or flakes, it typically has a very good wettability and as a rule also has a good solubility or dispersibility, so that already on contact with water it is fully dissolved or dispersed within a few seconds, in any case through light stirring. In addition, it can be used in many different ways and is very readily miscible and storable with all sorts of dry mortar mixtures. Moreover, it is possible without great expense to adjust the rheological additive to specific formulations of the building material compounds without new polymers having to be prepared in a costly manner. The use of the additive according to the invention moreover make it possible for the formulator to replace the casein used in the existing recipes of his building material compounds in an easy way, as a result of which his raw materials costs are no longer dependent on those of casein.

The invention is further elucidated with reference to the following examples. Unless indicated otherwise, the tests are carried out at a temperature of 23°C and a relative humidity of 50%.

### Substances used and their abbreviations:

- PCE: commercially available, modified powdery polycarboxylate ether; pH-value of the 20% aqueous solution is 6.5 - 8.5.
- PVOH: partially hydrolyzed powdery polyvinyl alcohol with a degree of hydrolysis of 88% and a Höppler viscosity as 4% aqueous solution of 40 mPas.
- PEG: powdery polyethylene glycol with a molecular weight of about 16,000.
- Na-AA: sodium salt of a water-soluble acrylic acid copolymer powder with a sodium content (as Na₂O) of 18.9%.
- casein: casein 110 mesh.
- CE: commercially available powdery hydroxethyl cellulose with a Brookfield viscosity as 2% aqueous solution of 400 - 700 mPas at 20 rpm.

### Preparation of the additives:

### Additive 1:

33.4 parts by weight of PCE, 33.3 parts by weight of PVOH, and 33.4 parts by weight of PEG were homogeneously mixed with one another using a stirrer. The result was a homogeneous, free-flowing additive which is easy to dose and easily wettable.

### Additive 2:

35 parts by weight of PCE, 32.5 parts by weight of PVOH, and 32.5 parts by weight of Na-AA were homogeneously mixed with one another using a stirrer. The result was a homogeneous, free-flowing additive which is easy to dose and easily wettable.

### Additive 3 (Comparative):

Instead of an additive according to the invention 0.40 parts by weight of casein and 0.05 parts by weight of CE were directly added to the dry mortar formulation according to Table 3.

### Example 1

From the individual dispersing agents or stabilizers 10 wt.% aqueous solutions were prepared, while the powdery dispersing agents and stabilizers were mixed with the appropriate amount of water and left to stand for 24 hours (Experiments 1-1 to 1-4). The Brookfield viscosity was measured at 20 and 100 rpm. In order to examine the interaction of the individual dispersing agents or stabilizers with the other components of Additives 1 and 2, the 10 wt.% solutions in question were mixed with one another in the specified weight ratios (see Tables 1 and 2), in which process a possible interaction was observed immediately (Experiment of Table 2) or within a few minutes (Experiment of Table 1). The mixtures were left to stand for 24 hours before the Brookfield viscosities were measured.

**Table 1: The measured Brookfield viscosities of the individual dispersing agents and stabilizers as 10 wt.% solutions and of the different combinations according to the ratios present in Additive 1, measured in all cases at 20 and 100 rpm. Unless specified otherwise, Spindle 3 was used.**

| **Experiment No.** | **DM or SM ^{a)}** | **Weight ratio** | **BV ^{b)} [mPas]** | |
|---|---|---|---|---|
| | | | **20 rpm** | **100 rpm** |
| 1-1 (Ref.) | PCE | | 10 | 25 |
| 1-2 (Ref.) | PVOH | | 3,200 ^{c)} | 2,684 ^{c)} |
| 1-3 (Ref.) | PEG | | 15 | 32 |
| 1-4 (Ref.) | PCE/PVOH | 50:50 | 110 | 107 |
| 1-5 (Ref.) | PCE / PEG | 50:50 | 15 | 29 |
| 1-6 (Ref.) | PVOH / PEG | 50:50 | ^{d)} | ^{d)} |
| 1-7 | PCE/PVOH/PEG | 33.4 : 33.3 : 33.3 | ^{d)} | ^{d)} |

| | | | | |
|---|---|---|---|---|
| a) DM stands for dispersing agent, SM for stabilizer. b) BV stands for Brookfield viscosity. c) Spindle 5 was used. d) A homogeneous solution was not obtained. In the mixture within a few minutes gel-like aggregates are formed, which cannot be broken any more by stirring. When the mixture is left to stand overnight, 2 phases are formed (an aqueous phase and a gel-like one). | | | | |

The results of Table 1 show impressively that the PCE used does not enter into a viscosity-increasing interaction with the two other components present in Additive 1. Rather, the viscosity of the used polyvinyl alcohol solution decreases many times over when it is mixed with the aqueous PCE solution (Exp. Nos. 1-4). When on the other hand the two non-ionic aqueous solutions of PVOH and PEG are mixed with one another (Exp. Nos. 1-6), a high-viscous gel is formed, in which process also part of the water is exsolved, which clearly demonstrates the viscosity-increasing interaction.

**Table 2: The measured Brookfield viscosities of the individual dispersing agents and stabilizers as 10 wt.% solutions and of the different combinations according to the ratios present in Additive 2, measured in all cases at 20 and 100 rpm. Unless specified otherwise, Spindle 3 was used.**

| **Experiment No.** | **DM or SM ^{a)}** | **Weight ratio** | **BV ^{b)} [mPas]** | |
|---|---|---|---|---|
| | | | **20 rpm** | **100 rpm** |
| 2-1 (Ref.) | PCE | | 10 | 25 |
| 2-2 (Ref.) | PVOH | | 3,200 ^{c)} | 2,684 ^{c)} |
| 2-3 (Ref.) | Na-AA | | 5 | 14 |
| 2-4 (Ref.) | PCE/PVOH | 50:50 | 110 | 107 |
| 2-5 (Ref.) | PCE / Na-AA | 50:50 | 10 | 19 |
| 2-6 (Ref.) | PVOH / Na-AA | 50:50 | ^{d)} | ^{d)} |
| 2-7 | PCE/PVOH/Na-AA | 35.0 : 32.5 : 32.5 | ^{d)} | ^{d)} |

| | | | | |
|---|---|---|---|---|
| a) - c) Legend see Table 1. d) The mixture flocculates. | | | | |

The results of Table 2 likewise show that the PCE used does not enter into a viscosity-increasing interaction with the Na-AA present in Additive 2 either. When on the other hand the aqueous solutions of PVOH and Na-AA are mixed with one another (Exp. Nos. 2-5), immediately flocculates are formed which cannot be stirred up again.

### Example 2

A dry mortar formulation according to Table 3 was prepared. The amounts used according to Tables 3 and 4 of the individual dispersing agents and stabilizers were weighed in and homogeneously mixed with the dry mortar formulation. Next, in each case 100 g of the obtained dry mortar formulation were stirred with a 60 mm propeller stirrer at a rate of 950 rpm for 60 seconds, with the corresponding amount of mixing water being added with stirring. After a maturing time of 3 minutes, the mortar prior to being measured was again blended for 15 seconds with the stirrer, and the degree of spread was measured in accordance with EN 12706 (Chapter 8) and the flow time of the mortar was determined in a Ford cup in accordance with DIN 53211 with a 6 mm nozzle, with the mortars being separately mixed for the two measurements.

**Table 3: Dry mortar formulation of the used smoothing compound. As mixing water were used 21 parts by weight water on 100 parts by weight of dry mortar formulation.**

| | |
|---|---|
| PZ Anneliese Milke 52,5R premium | 23.00 wt.% |
| HAC Fondu Lafarge | 12.00 wt.% |
| calcium hydrate | 1.00 wt.% |
| hard moulding plaster No.1 | 4.10 wt.% |
| quartz sand 0,1-0,3 mm | 42.43 wt.% |
| calcium carbonate Omyacarb® 10BG | 15.00 wt.% |
| setting retarder | 0.15 wt.% |
| powder defoamer | 0.12 wt.% |
| lithium carbonate | 0.20 wt.% |
| dispersion powder ELOTEX® FL 4200 | 2.00 wt.% |

**Table 4: The measured degree of spread in accordance with EN 12706 and measured flow times in accordance with EN ISO 2431 for the mixed dry formulation according to Table 3 and for the individual dispersing agents and stabilizers as well as the different combinations with the ratios present in Additive 1.**

| **Experiment No.** | **DM or SM ^{a)}** | **Amount used ^{b)} [wt.%]** | **Spread ^{c)} [mm]** | **Flow-time ^{d)} [sec]** | **Observations** |
|---|---|---|---|---|---|
| 3-1 (Ref.) | none | 0.0 | 45 | --- ^{e)} | firm |
| 3-2 (Ref.) | PCE | 0.2338 | 198 | 25 | compound bleeds ^{f)} |
| 3-3 (Ref.) | PVOH | 0.2331 | 50 | --- ^{e)} | firm |
| 3-4 (Ref.) | PEG | 0.2331 | 45 | --- ^{e)} | firm |
| 3-5 (Ref.) | PCE | 0.2338 | 160 | 59 | |
| | PVOH | 0.2331 | | | |
| 3-6 (Ref.) | PCE | 0.2338 | 179 | 34 | compound bleeds ^{f)} |
| | PEG | 0.2331 | | | |
| 3-7 | PCE | 0.2338 | 160 | 92 | Additive 1 |
| | PVOH | 0.2331 | | | |
| | PEG | 0.2331 | | | |
| 3-8 (Ref.) | PVOH | 0.2331 | 50 | ---^{e)} | firm |
| | PEG | 0.2331 | | | |
| 3-9 (Ref.) | casein | 0.4000 | 161 | 86 | Additive 3 (comparative) |
| | CE | 0.0500 | | | |

| | | | | | |
|---|---|---|---|---|---|
| a) See Table 1 b) The amounts used are based on 100 wt.% dry mortar formulation from Table 3. c) The degree of spread was determined in accordance with EN 12706. d) The flow time was determined with a flow cup with a 6 mm nozzle in accordance with EN ISO 2431. e) The compound was too high-viscous to flow through the 6 mm nozzle. f) The compound washes out and is precipitated, i.e. it bleeds. | | | | | |

From Tables 4 and 5 it becomes clear that the use of PCE is important in order to obtain a flowable smoothing compound. This is shown on the one hand in Experiment 3-1 (Reference), where neither a dispersing agent nor a stabilizer is added, as well as in Experiment 3-8, where the smoothing compound contains PVOH as well as PCE. It is true that Experiment 4-7, containing PVOH as well as Na-AA, also has certain smoothing properties, since Na-AA as dispersing agent has a diluting effect. As a result the flow time becomes comparable with that of Experiment 3-9. However, the degree of spread is clearly too low. Nor can the values of Experiment 3-9 be obtained by changing the amount used and/or the ratio.

When on the other hand even a small amount of PCE is admixed (Experiments 3-2 and 4-1), this brings about a clearly higher degree of spread as well as a low flow time. When the mixing water content is reduced in order to prevent washing out, and/or the proportion of PCE is decreased, it is true that a degree of spread which is similar to that of Experiment 3-9 can be obtained. The flow time, however, never increases to that of casein.

**Table 5: The measured degree of spread in accordance with EN 12706 and measured flow times in accordance with EN ISO 2431 for the mixed dry formulation according to Table 3 and for the individual dispersing agents and stabilizers as well as the different combinations with the ratios present in Additive 2.**

| **Experiment No.** | **DM or SM ^{a)}** | **Amount used ^{b)} [wt.%]** | **Spread ^{c)} [mm]** | **Flow time ^{d)} [sec]** | **Observations** |
|---|---|---|---|---|---|
| 3-1 (Ref.) | none | 0.0 | 45 | --- ^{e)} | firm |
| 4-1 (Ref.) | PCE | 0.1750 | 190 | 26 | compound bleeds ^{f)} |
| 4-2 (Ref.) | PVOH | 0.1625 | 55 | --- ^{e)} | firm |
| 4-3 (Ref.) | Na-AA | 0.1625 | 168 | 52 | slight bleeding ^{f)} |
| 4-4 (Ref.) | PCE | 0.1750 | 173 | 44 | slight bleeding ^{f)} |
| | PVOH | 0.1625 | | | |
| 4-5 (Ref.) | PCE | 0.1750 | 175 | 47 | slight bleeding ^{f)} |
| | Na-AA | 0.1625 | | | |
| 4-6 | PCE | 0.1750 | 158 | 83 | Additive 2 |
| | PVOH | 0.1625 | | | |
| | Na-AA | 0.1625 | | | |
| 4-7 (Ref.) | PVOH | 0.1625 | 140 | 71 | |
| | Na-AA | 0.1625 | | | |
| 3-9 (Ref.) | casein | 0.4000 | 161 | 86 | Additive 3 (comparitive) |
| | CE | 0.0500 | | | |

### Legend see Table 4.

It is true that because of the addition of PEG (Experiment 3-6) or PVOH (Experiments 3-5 and 4-4) to PCE the viscosity of the smoothing compound increases slightly, which shows itself in a lower degree of spread and a slightly increased flow time. However, it is not possible to set both the degree of spread and the flow time of the smoothing compound with casein only with two dispersing agents and/or stabilizers, even when the content of the individual dispersing agents and/or stabilizers and/or the mixing water content is changed. When on the other hand a combination of all 3 components, such as are present for instance in Additive 1 (Experiment 3-7) and Additive 2 (Experiment 4-6), is mixed together, the degree of spread as well as the flow time sets itself such as if casein were used. The flow time in particular increases very strongly, without having a negative effect on the degree of spread. In the case of Additive 1 this is attributed to the interaction between PEG (contains many ether groups) in Additive 1, or of Na-AA (contains many carboxyl groups) in Additive 2, and PVOH (contains many hydroxyl groups). As an additional effect the combination of dispersing agents and/or stabilizers according to the invention can also replace the proportion of cellulose ether entirely or, depending on the recipe, at least in part, as is obvious from Examples 3-7 and 4-6.

Surprisingly, it has been shown that because of the additive according to the invention not only the degree of spread and the flow time can be set to values such as if casein were used. But the other important properties of casein-containing smoothing compounds, in particular the flow properties at lower as well as higher viscosities, the stabilizing properties, the capacity to cover over raw material variations, in particular of cements and fillers, a good water retention capacity, a high abrasion resistance of the cured compound, as well as the setting behaviour of the compound astonishingly also set themselves such as if casein were used.

## Claims

1. Rheological additive suitable for use in a minerally setting building material compound, **characterized in that** the rheological additive contains
- at least two different dispersing agents and at least one stabilizer, or
- at least one dispersing agent and at least two different stabilizers, wherein said at least one dispersing agent is or said at least two dispersing agents are selected from the group of lignin sulfonate, polycarboxylate, polycarboxylate ether, melamine formaldehyde sulfonate, alkylphenol glycol ether and/or naphthaline sulfonates, and
wherein said at least one stabilizer is or said at least two stabilizers are selected from the group of modified or unmodified, fully or partially hydrolyzed polyvinyl alcohol, polyvinyl acetal, polyvinyl pyrrolidone, polyalkylene glycol, polyalkylene oxide, agar-agar, carob seed grain, pectin, poly(meth)acrylate and/or (meth)acrylate thickeners, poly(meth)-acrylamides, polyurethanes, associative thickeners, gelatine and/or soy protein.

2. Additive according to claim 1, **characterized in that** at least one dispersing agent and/or stabilizer enters with at least one further component of the minerally setting building material compound and/or the additive into a viscosity-increasing interaction in the minerally setting building material compound mixed with water

3. Additive according to claim 2, **characterized in that** the viscosity-increasing interaction with the same mixing water content, based on the dry content of the building material compound, leads to an at least 50% increased flow time in accordance with EN ISO 2431, while the degree of spread in accordance with EN 12706 changes by less than 20%.

4. Additive according to one or more of claims 1 to 3, **characterized in that** the weight ratio of the sum of the dispersing agents to the sum of the stabilizers is about 500 : 1 to about 1 : 10.

5. Additive according to one or more of claims 1 to 4, **characterized in that** said at least one dispersing agent is or said at least two dispersing agents are polycarboxylate and/or polycarboxylate ether.

6. Additive according to one or more of claims 1 to 5, **characterized in that** said at least one stabilizer is or said at least two stabilizers are modified or unmodified, fully or partially hydrolyzed polyvinyl alcohol, polyvinyl pyrrolidone, polyalkylene glycol and/or polyalkylene oxide.

7. Additive according to one or more of claims 1 to 6, **characterized in that** in the minerally setting building material compound mixed with water at least one dispersing agent and/or stabilizer which enters into a viscosity-increasing interaction with at least one further component of the minerally setting building material compound and/or the additive is a polymer containing carboxyl, hydroxyl, ether, amide, amine, keto, aldehyde, carbamate, carbamide and/or ammonium groups.

8. Additive according to one or more of claims 1 to 7, **characterized in that** the additive contains further components, in particular surface-active compounds, water-redispersible dispersion powders, cellulose ethers, agents to reduce shrinkage and/or to reduce efflorescence, agents to control the hydration of minerally setting systems, hydrophobic agents, water retention agents, fillers, anti-caking agents, cement and/or gypsum.

9. Process for the preparation of the additive according to one or more of claims 1 to 8, **characterized in that**
- the individual components are mixed with one another in powder form, or
- at least one of the components is present in liquid form and the remaining components are mixed as liquid and/or as powder with the component in liquid form, or
- at least one of the components is present in liquid form and is dried, in which case the further components are added as liquid and/or as powder before, during and/or after the drying, or
- the or part of the individual components of the rheological additive are added as separate components to the building material compound during the preparation thereof and are mixed with the further components of the building material compound.

10. Use of the rheological additive according to one or more of claims 1 to 8 in a minerally setting building material compound, wherein said compound is selected from a dry mortar, fresh mortar, concrete, shotcrete, self-compacting concrete, plaster of Paris, plaster, shotplaster, gypsum plaster, gypsum/cement plaster, cement/lime plaster, flow bed mortar, repair mortar, tile grout, anchor mortar, bedding mortar, flowable floor screed, a levelling compound, a self-levelling flooring compound, a smoothing compound and a trowelling compound.

11. Minerally setting building material compound containing the rheological additive according to one or more of claims 1 to 8.

12. Building material compound according to claim 11, **characterized in that** the building material compound contains about 0.01 to about 3.0 wt.% of the rheological additive, based on the dry weight of the building material compound.

13. Building material compound according to claim 11 or 12, **characterized in that** the building material compound is a self-levelling flooring compound of which the properties are similar to those of casein-containing compounds, wherein the degree of spread of the self-levelling flooring compound, measured in accordance with EN 12706, does not deviate more than 10% and/or the flow time of the self-levelling flooring compound, measured with a flow cup with a 6mm nozzle in accordance with EN ISO 2431, does not deviate more than 15% from the self-levelling flooring compound with casein and without rheological additive.
